Europäisches Patentamt

European Patent Office

Office européen des brevets

(19)

(11) Veröffentlichungsnummer: **0 201 874**

**A2**

(12) **EUROPÄISCHE PATENTANMELDUNG**

(21) Anmeldenummer: 86106316.2

(51) Int. Cl.4: **C08L 71/04 , C08L 25/08**

(22) Anmeldetag: 09.05.86

(30) Priorität: 14.05.85 DE 3517332

(43) Veröffentlichungstag der Anmeldung:
20.11.86 Patentblatt 86/47

(84) Benannte Vertragsstaaten:
BE DE FR GB IT NL

(71) Anmelder: **BASF Aktiengesellschaft**
**Carl-Bosch-Strasse 38**
**D-6700 Ludwigshafen(DE)**

(72) Erfinder: **Hambrecht, Juergen, Dr.**
**Am Klosterwald 31**
**D-4400 Muenster-Hiltrup(DE)**
Erfinder: **Boehlke, Klaus, Dr.**
**Gerhart-Hauptmann-Strasse 53**
**D-6717 Hessheim(DE)**
Erfinder: **Heckmann, Walter, Dr.**
**Geiersbergstrasse 2**
**D-6940 Weinheim(DE)**
Erfinder: **Seiler, Erhard, Dr.**
**Erpolzheimer Strasse 1**
**D-6700 Ludwigshafen(DE)**
Erfinder: **Schmitt, Burghard, Dr.**
**Braeunigstrasse 12**
**D-6520 Worms 24(DE)**
Erfinder: **Gausepohl, Hermann, Dr.**
**Neuweg 10**
**D-6704 Mutterstadt(DE)**

(54) **Thermoplastische Formmassen.**

(57) Thermoplastische Formmassen, die aus Poly-phenylenether, einem hydrierten Blockcopolymeren aus Styrol und Dienen sowie gegebenenfalls einem Styrolpolymerisat und weiteren Zusätzen bestehen, wobei die Blockpolymeren in der Polymermatrix aus Polyphenylenether und gegebenenfalls Styrolpoly-merisat dispergiert sind und eine Zellenteilchenmor-phologie haben.

Figur 1

# Thermoplastische Formmassen

Die Erfindung betrifft superzähe und hochsteife thermoplastische Formmassen mit ausgezeichneten Verarbeitungseigenschaften und Dimensionsstabilität die Polyphenylenether, hydrierte Blockcopolymerisate und gegebenenfalls Polyvinylaromaten sowie übliche Zusätze enthalten, wobei die hydrierten Blockcopolymerisate in Form kleiner dispergierter Teilchen vorliegen die Blockcopolymerisateinschlüsse und eine Umhüllung aus Polyvinylaromat haben.

Thermoplastische Massen, die sich zur Herstellung von Formteilen eignen und die schlagzäh modifizierte Styrolpolymerisate und Polyphenylenether enthalten sind z.B. aus den US-Patentschriften 3 383 435, 4 128 602 sowie 4 128 603 bekannt. Solche Formmassen eignen sich zur Herstellung von Formteilen, die sich im Vergleich zu schlagzäh modifizierten Styrolpolymerisaten, die nicht mit Polyphenylenethern abgemischt sind, durch eine bessere Wärmeformbeständigkeit auszeichnen. Die Materialeigenschaften derartiger Formmassen sind im allgemeinen zufriedenstellend, doch hat es sich gezeigt, daß bei hoher Zähigkeit die Massen ein nicht ausreichendes Fließverhalten und bei gutem Fließverhalten eine nicht befriedigende Zähigkeit haben.

Zur weiteren Erhöhung der Zähigkeit ist deshalb in einer Reihe von Literaturstellen, z.B. in der DE-OS 20 00 118, 22 55 930, 24 34 848, 30 38 551 und 30 43 893 der Zusatz von hydrierten Blockcopolymerisatkautschuken unterschiedlicher Zusammensetzung zu Polyphenylenethern und gegebenenfalls Styrolpolymerisaten empfohlen worden. Die resultierenden Formmassen haben auch eine hohe Zähigkeit, sie lassen sich jedoch bei höheren Polyphenylenetheranteilen nur schwer verarbeiten und weisen darüberhinaus eine nicht befriedigende Steifigkeit auf. Außerdem genügt die Dimensionsstabilität der resultierenden Formmassen noch nicht in allen Fällen.

Aufgabe der vorliegenden Erfindung ist es daher hochzähe und gleichzeitig steife Formmassen aus Polyphenylenethern und Blockcopolymerisaten zu schaffen, die eine gute Verarbeitbarkeit und hohe Dimensionsstabilität haben.

Die Aufgabe der Erfindung wird gelöst durch thermoplastische Formmassen die aus

a) mindestens einem Polyphenylenether,

b) mindestens einem hydrierten Blockcopolymeren aus mindestens einem polyvinylaromatischen Block und einem gesättigten Kautschukblock,

c) gegebenenfalls einem Polyvinylaromaten und

d) gegebenenfalls üblichen Zusätzen bestehen. Das Verfahren ist dadurch gekennzeichnet, daß in einer Polymermatrix, bestehend aus Polyphenylenether, gegebenenfalls im Gemisch mit einem Polyvinylaromaten die hydrierten Blockcopolymerisate gleichmäßig dispergiert enthalten sind, wobei die Blockcopolymerisatteilchen eine mittlere Größe - (Gewichtsmittel) im Bereich von 0,05 bis 2,0 $\mu$m und eine Zellenteilchenmorphologie mit Einschlüssen aus hydriertem Blockcopolymerisat und Umhullungen von Polyvinylaromatmembranen haben.

Ein weiterer Gegenstand der Erfindung ist ein Verfahren zur Herstellung derartiger Formmassen bei dem man die Komponenten a), b) und gegebenenfalls c) in Lösung mischt und die Massen anschließend aus der Lösung isoliert.

Ein bevorzugter Gegenstand ist ein derartiges Verfahren bei dem die Komponenten a), b) und c) in einem aromatischen oder halogenhaltigen aliphatischen Kohlenwasserstoff in Konzentrationen von 10 bis 80 Gew.%, bezogen auf die Gesamtmischung aus a), b) und c) und Lösungsmittel gelöst und anschließend die Lösungsmittel bei Temperaturen von 280°C entfernt werden.

Bevorzugt sind als Polyphenylenether a) die Homopolymerisate des 2,6-Di-methylphenols und die Copolymerisate aus 2,6-Dimethylphenol und 2,3,6-Trimethylphenol.

Die hydrierten Blockcopolymeren b) enthalten mindestens einen thermoplastischen harten Block $b_1$) der aus vinylaromatischen Monomeren aufgebaut ist und mindestens einen Elastomerblock $b_2$) der im wesentlichen aus konjugierten Dienen und gegebenenfalls statistisch eingebauten vinylaromatischen Monomeren aufgebaut ist. Die Blockcopolymeren enthalten gegebenenfalls den Rest eines Kopplungsmittels $b_3$). Die Blockcopolymeren können linear oder verzweigt aufgebaut sein.

Gegebenenfalls können in thermoplastischen Formmassen Polyvinylaromaten enthalten sein. Bevorzugte Polyvinylaromaten sind Styrolhomopolymerisate, Styrol-Acrylnitril-Copolymerisate, Styrol-Maleinsäureanhydrid-Copolymerisate, Styrol-(Meth)acrylsäure-Copolymerisate, Styrol-(Meth)-acrylsäurealkylester-Copolymerisate bzw. -Terpolymerisate aus den genannten Verbindungen. Es können auch α-und/oder p-Methylstyrol-Bausteine eingebaut sein. Bevorzugt sind auch schlagzäh modifizierte Styrolpolymerisate.

Die Formmassen enthalten darüberhinaus gegebenenfalls Hilfs-und Zusatzstoffe wie Glasfasern, mineralische Füllstoffe, Flammschutzmittel, Plastifizier-und Verarbeitungshilfsmittel sowie Stabilisatoren und Antistatika.

Die erfindungsgemäßen Formmassen enthalten vorzugsweise 20 bis 90 Gew.-Teile an Polyphenylenether a), 20 bis 40 Gew.-Teile des hydrierten Blockcopolymerisates b), 0 bis 78 Gew.-Teile Styrolpolymerisate und 0 bis 40 Gew.-Teile Hilfs-bzw. Zusatzstoffe. Die Gewichtsteile sollen sich jeweils zu 10 Gew.-Teilen addieren.

Unter Formmassen sollen ungeformte Mischungen verstanden werden, die sich durch thermoplastische Verarbeitung innerhalb bestimmter Temperaturbereiche zu Formteilen oder zu Halbzeug verarbeiten lassen. Die Formmassen können als Granulat vorliegen, sie können aber auch pulverförmig oder durch Tablettierung vorgeformt oder in Form von Platten und Bahnen vorliegen.

Komponente a)

Bei den Polyethern handelt es sich um Verbindungen auf der Basis von in ortho-Position disubstituierten Polyphenylenoxiden, wobei der Ethersauerstoff der einen Einheit an den Benzolkern der benachbarten Einheit gebunden ist. Dabei sollen mindestens 50 Einheiten miteinander verknüpft sein. Die Polyether können in ortho-Stellung zum Sauerstoff Wasserstoff, Halogen, Kohlenwasserstoffe, die kein α-ständiges tert. Wasserstoffatom besitzen, Halogenkohlenwasserstoffe, Phenylreste und Kohlenwasserstoffoxi-Reste tragen. So kommen in Frage: Poly(2,6-dichlor-1,4-phenylen)ether, Poly(2,6-diphenyl-1,4-phenylen)ether, Poly(2,6-dimethoxy-1,4-phenylen)ether, Poly(2,6-dimethyl-1,4-phenylen)ether, Poly(2,6-dimethyl-co-2,3,6-trimethyl-1,4-phenylen)ether, Poly(2,6-dibrom-1,4-phenylen)ether. Bevorzugterweise werden Poly(2,6-dimethyl-1,4-phenylen)ether und Poly(2,6-dimethyl-co-2,3,6-trimethyl-1,4-phenylen)ether eingesetzt. Ganz besonders bevorzugt werden Poly(2,6-dimethyl-1,4-phenylen)ether mit einer Grenzviskosität zwischen 0,40 und 0,66 dl/g (gemessen in Chloroform bei 30°C).

Die aromatischen Polyether können durch Selbstkondensationn der entsprechend einwertigen Phenole durch Einwirken von Sauerstoff in Gegenwart eines Katalysatorsystems, wie es beispielsweise in den US-PS 3 219 625, 3 306 875, 3 956 442, 3 965 069, 3 972 851 beschrieben ist, hergestellt werden.

Komponente b)

Die hydrierten Blockkautschuk-Copolymeren sind linear oder verzweigte Blockcopolymere, die im wesentlichen aufgebaut sind aus

b₁) mindestens einem thermoplastischen Hartblock der seinerseits im wesentlichen aus vinylaromatischen Monomeren aufgebaut ist und

b₂) mindestens einem Elastomerblock der im wesentlichen aus konjugierten Dienen und gegebenenfalls statistisch eingebauten vinylaromatischen Verbindungen besteht und

b₃)gegebenenfalls einem Kopplungsmittel.

Als vinylaromatische Monomere, die in den Blockanteilen b₁) und b₂) einpolymerisiert sind, kommen vor allem Styrol sowie α-und p-Methylstyrol in Frage. Besonders bevorzugt wird Styrol verwendet. Der Gewichtsanteil der monovinylaromatischen Verbindungen an b) beträgt 5 bis 60 Gew.%, vorzugsweise 10 bis 50 Gew.%.

Konjugierte Diene, die für den Elastomerblockteil b₂) insbesondere in Betracht kommen, sind beispielsweise Butadien-1,3, 2,3-Dimethylbutadien sowie Isopren und Pentadien. Diese Diene werden entweder allein oder in Mischung miteinander sowie gegebenenfalls in Mischung mit vinylaromatischen Verbindungen für die Herstellung der Elastomerblöcke b₂) herangezogen. Der Dien-Gehalt in den (Co)-Polymerketteen oder in sternförmig aufgebauten Copolymerisatteilen kann 95 bis 40 Gew.%, insbesondere 90 bis 50 Gew.%, bezogen auf (b) betragen.

Als Kupplungsmittel werden beispielsweise Polyepoxide, wie epoxidiertes Leinsamenöl, Polyisocyanate, beispielsweise Benzo-1,2,4-triisocyanat, Polyketone, Polyanhydride, wie beispielsweise das Dianhydrid der Pyromellithsäure oder Polyhalogenide eingesetzt. Ebenso können auch Dicarbonsäureester, z.B. Diethyladipat oder ähnliche, als Kupplungsmittel verwendet werden. Eine weitere bevorzugte Gruppe von Kupplungsmitteln sind die Siliciumhalogenide, insbesondere Siliciumtetrachlorid, Siliciumtetrabromid, Dimethyldichlorsilan, Trichlorethylsilan oder 1,2-Bis(methyldichlorsilyl)-ethan. Weiterhin können als Kupplungsmittel auch Polyvinylaromaten, insbesondere Divinylbenzol, eingesetzt werden, wie es beispielsweise in der US-PS 3 280 084 beschrieben ist. In diesem Fall addieren sich einige Divinylbenzol-Einheiten unter Vernetzung zu einem Verzweigungszentrum, über das die vorgeformten Polymerisatblöcke miteinander verbunden werden.

Die hydrierten Blockcopolymerisate (b) der oben angegebenen allgemeinen Struktur können linear oder verzweigt aufgebaut sein und enthalten jeweils nicht-elastomere A-Blöcke und elastomere B-Blöcke, deren Herstellung oben beschrieben wurde. Die Blöcke A und B können scharf getrennt oder einen Tapered-Übergang aufweisen. Bekannterweise werden Tapered-Übergänge durch Polymerisation einer Mischung der Monomeren der Blocke A und B, also von Butadien und Styrol erzeugt. Die Zugabe des zweiten Monomeren nach beendeter Polymerisation des ersten führt zu - scharfen Blockübergängen.

Die Herstellung der Blockcopolymeren die vinylaromatische und Dienanteile enthalten ist vielfach beschrieben und dem Fachmann bekannt. Zu nennen sind die US-PS 3 231 635, 3 251 905, 3 431 323, 3 595 942. Weiterhin ist zu nennen des Handbuch "Polymer Chemistry of Synthetic Elastomers", herausgegeben von Kennedy et.al., Interscience Publishers, Bd. 23, Teil II (1969), S. 553ff. Die Herstellung erfolgt üblicherweise durch anionische Polymerisation.

Nach beendeter anionischer Polymerisation werden die aktiven Lithiumcarbanionen vor dem Hydrieren durch Zugabe von protonenaktiven Substanzen wie Wasser, Alkohol oder Säuren abgebrochen oder durch Zusatz von polyfunktionellen Kupplungsmitteln gekoppelt.

Das Hydrieren der Butadienphase des Copolymerisates erfolgt nach bekannten Verfahren. Dabei ist darauf zu achten, daß überwiegend die vom Butadien herruhrenden Doppelbindungen hydriert werden und ein Hydrieren der aromatischen Systeme vermieden wird. Das Hydrieren kann beispielsweise durch Umsetzen der Polymerisate mit Wasserstoff bei Drücken zwischen 5 und 30 bar, insbesondere 10 bis 20 bar und Temperaturen im Bereich von 50 bis 200°C, insbesondere 70 bis 150°C, in Gegenwart von Übergangsmetallkatalysatoren erfolgen. Dabei ist es erforderlich, mindestens 95 %, insbesondere 97 %, der olefinischen Doppelbindungen zu hydrieren. Als Katalysatoren eignen sich z.B. homogene Ni/Al-Katalysatorsysteme, hergestellt aus Ni-II-octoat bzw. -acetylacetonat, (Bis-(2,4-pentadienato)-nickel) und Al-triethyl bzw. -triisobutyl. Man verwendet zweckmäßig den Katalysator in Mengen von 0,3 Mol/kg bis 7,0 mMol/kg, bezogen auf Ni und das Gewicht des zu hydrierenden Polymeren. Auch solche Verfahren sind bekannt und beispielsweise in der US-PS 4 090 996 beschrieben. Sie sind außerdem Gegenstand der Patentanmeldungen P 34 34 978.2 und P 34 34 976.6.

Komponente c)

Als Polymerisate von monovinylaromatischen Verbindungen, die in der erfindungsgemäßen Formmasse nur gegebenenfalls enthalten sind, werden sowohl Styrolhomo-und -copolymerisate als auch schlagzäh modifizierte Styrolpolymerisate eingesetzt.

Als monovinylaromatische Verbindungen kommen dabei insbesondere Styrol in Betracht, ferner die kern-oder seitenkettenalkylierten Styrole. Vorzugsweise wird jedoch Styrol allein verwendet.

Die Homopolymerisate werden dabei nach den bekannten Verfahren, in Masse, Lösung oder Suspension hergestellt (vgl. Ullmann's Enzyklopädie der technischen Chemie, Bd. 19, Seite 265, Verlag Chemie, Weinheim, 1980). Die Homopolymerisate können mittlere Molekulargewichte ($\overline{M}$ n) von 1000 bis 200.000 aufweisen.

Als Comonomere zur Herstellung von Copolymerisaten kommen z.B. (Meth)acrylsäure, (Meth)acrylsäurealkylester mit 1 bis 4 C-Atomen im Alkylrest, Acrylnitril und Maleinsäureanhydrid sowie Maleinsäureimide in Betracht. Die Comonomeren sind je nach ihrer chemischen Struktur in unterschiedlichen Mengen in Styrolpolymerisaten enthalten. Entscheidend für den Gehalt an Comonomeren im Mischpolymerisat des Styrolpolymerisates ist die Mischbarkeit des Polymerisats mit Polyphenylenether. Solche Mischungsgrenzen sind bekannt und beispielsweise in der US-PS 4 360 618, 4 405 753 und in der Veröffentlichung von J.R. Fried, G.A. Hanna, Polym. Eng. Sci. 22 (1982), S. 705ff, beschrieben. Die Herstellung der Copolymeren erfolgt nach bekannten Verfahren, die beispielsweise in Ullmann's Enzyklopädie der technischen Chemie, Bd. 19, S. 273ff, Verlag Chemie, Weinheim - (1980), beschrieben sind. Die Copolymerisate haben mittlere Molekulargewichte ($\overline{M}$ n) von 10.000 bis 200.000.

Die meist angewandten Verfahren zur Herstellung schlagzäh modifizierter Styrolpolymerisate sind die Polymerisation in Masse oder Lösung, wie es beispielsweise in der US-PS 2 694 692 beschrieben ist und Verfahren zur Masse-Suspensionspolymerisation, wie sie beispielsweise in der US-PS 2 862 906 beschrieben sind. Selbstverständlich sind auch andere Verfahren anwendbar, sofern die gewünschte Teilchengröße der Kautschukphase eingestellt wirrd.

Als Kautschuke werden die üblicherweise für die Schlagfestmodifizierung von Styrolpolymerisaten gebräuchlichen natürlichen oder synthetischen Kautschuke eingesetzt. Geeignete Kautschuke im Sinne der Erfindung sind neben Naturkautschuk, z.B. Polybutadien, Polyisopren und Mischpolymerisate des Butadiens und/oder Isoprens mit Styrol und anderen Comonomeren, die eine Glastemperatur unter -20°C besitzen. Besonders eignen sich Butadien-Polymerisate mit einem 1,4-cis-Gehalt, der zwischen 25 und 99 liegt. Es können aber auch Acrylatkautschuke, EPDM-, Polybutylen-und Polyoctenamerkautschuke eingesetzt werden.

Die schlagzäh modifizierten Styrolpolymerisate besitzen einen Weichkomponentenanteil von 20 bis 60 Gew.%, vorzugsweise von 22 bis 45 Gew.%. Die Teilchengröße der Weichkomponente sollte im Bereich von 0,2 bis 6 μm liegen. Unter mittlerer Teilchengröße ist dabei das Gewichtsmittel zu verstehen, wie es in der DE-OS 30 35 648 beschrieben ist. Besonders geeignet sind jedoch - schlagzäh modifizierte Polymerisate, in denen die mittlere Teilchengröße im Bereich von 0,6 bis 4 μm liegt und in denen 99 bis 85 Gew.% der Teilchen einen Teilchendurchmesser von 0,3 bis 0,9 μm und 1 bis 20 Gew.% der Teilchen einen Teilchendurchmesser von 3 bis 7 μm haben.

Komponente d)

Die Mischungen aus Polyphenylenether und den hydrierten Copolymerisaten, die gegebenenfalls auch Styrolpolymerisate enthalten, können darüber hinaus auch Hilfs-und Zusatzstoffe wie feuerhemmende Mittel aus der Gruppe der aromatischen Phosphate und Phosphinoxide, Verstärkungsmittel wie Glasfasern, organische und mineralische Hilfsstoffe sowie Stabilisatoren, Verarbeitungshilfsmittel wie Polyethylenwachs oder auch Farbstoffe und die sonst bisher für die Formmassen bekannt gewordenen Zusatzstoffe sowie weitere mit dem Matrixpolymeren mischbare Polymeren, wie Polyamide, Polyetherimide, Polyacrylate und alle andere mit Polyphenylenethern als verträglich bekannt gewordenen Polymerisate enthalten.

Wesentlich für die Herstellung der erfindungsgemäßen Formmassen ist, daß die Komponenten a), b) und gegebenenfalls c) in einem Lösungsmittel gelöst werden und man die Mischung anschließend aus der Lösung isoliert. Als Lösungsmittel für dieses Verfahren haben sich aromatische Kohlenwasserstoffe, wie Benzol, Toluol, Ethylbenzol, Xylol oder Naphthalin bewährt. Außerdem kommen Chlor enthaltende aliphatische Kohlenwasserstoffe wie Chloroform, Dichlormethan, Dichlorethan oder Trichlorethan in Frage. Besonders bevorzugt wird Toluol als Lösungsmittel eingesetzt. Das Lösen und Mischen der Komponenten erfolgt nach bekannten Verfahren z.B. in Rührbehältern, Mischschnecken oder Knetern (vgl. W. Wittenberger, Chemische Betriebstechnik, Springer-Verlag, Berlin (1944), S. 228ff und S. 277ff). Vorzugsweise wird dabei bei Temperaturen zwischen 50 und 180°C gearbeitet. Die Komponenten a), b) und gegebenenfalls c) sind in dem Lösungsmittel zu 10 bis 80, vorzugsweise 20 bis 70 Gew.%, enthalten. Die Polymerlösung wird anschließend nach bekannten Verfahren aufgearbeitet. So kann die Ausarbeitung durch Fällung, durch Spritztrocknung oder durch Naßaufarbeitung erfolgen, wobei das Toluol azeotrop aus der Lösung abdestilliert wird. Man kann auch die Methoden der Direktentgasung verwenden. Vorzugsweise wird nach der Methode der Direktentgasung gearbeitet - (vgl. W. Wittenberger, Chemische Betriebstechnik, Springer-Verlag, Berlin 1944, S. 291ff). Hier hat sich das Abtrennen des Lösungsmittels in Entgasungsextrudern und Zweischneckenentgasungsextrudern bewährt. Es ist dafür zu sorgen, daß die Temperatur unterhalb 280°C, vorzugsweise unter 260°C, gehalten wird.

Morphologie der Formmassen

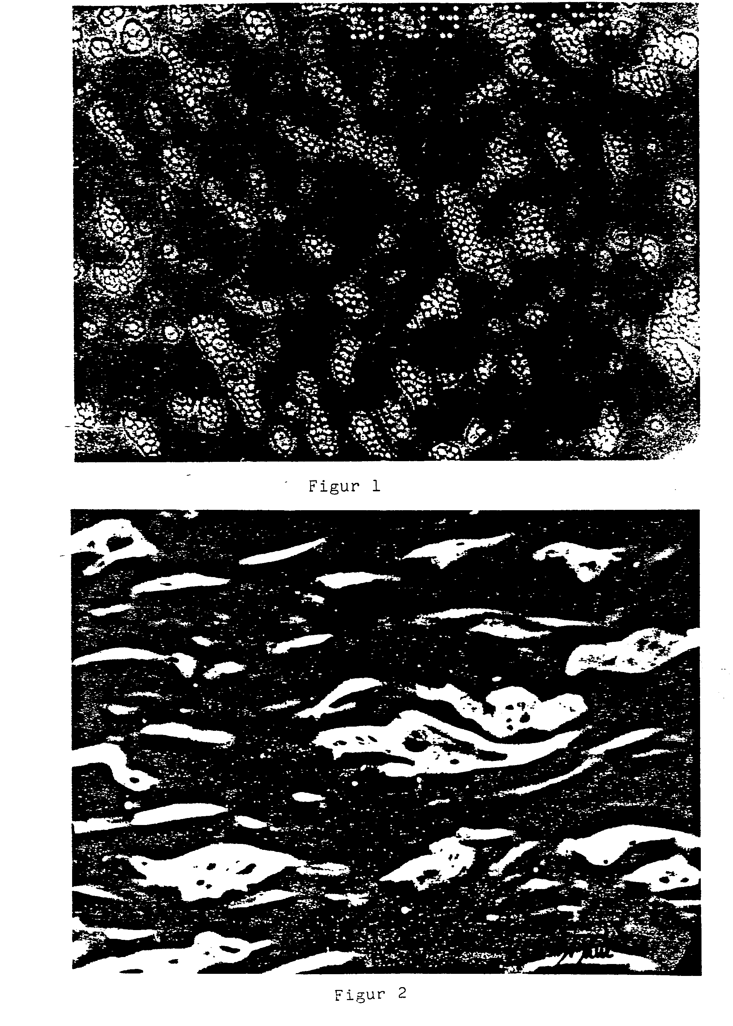

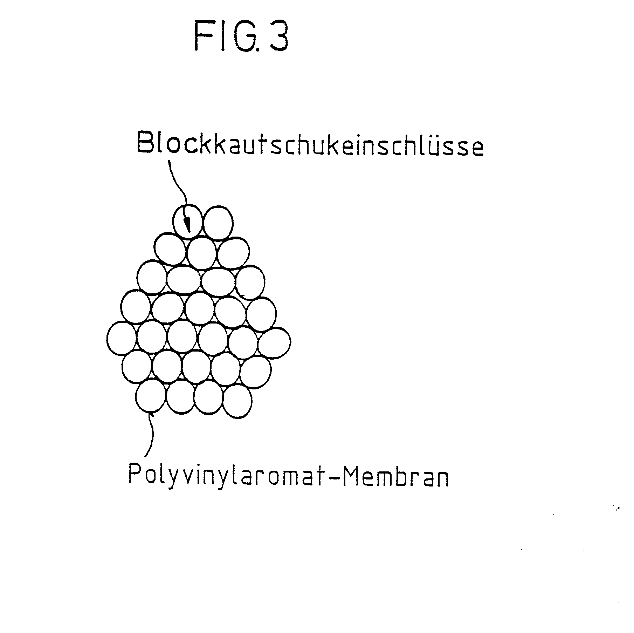

Die resultierenden erfindungsgemäßen Formmassen besitzen einen bisher unbekannten morphologischen Aufbau und unterscheiden sich demnach grundlegend von solchen Massen des Standes der Technik. Kennzeichnend für die erfindungsgemäßen Formmassen ist eine Zellenteilchenmorphologie in der die Hartmatrix aus dem Polyphenylenether a) und gegebenenfalls dem Styrolpolymerisat b) besteht. In die Hartmatrix sind die Blockcopolymerisatpartikel eingebettet, wobei Einschlüsse aus hydriertem Blockkautschuk in die Teilchen eingeschlossen sind und die Teilchen sind mit einer Membran von Polyvinylaromaten umhüllt (Figur 1). Nach dem Stand der Technik resultieren Massen die grobe Blockkautschukpartikel eingebettet in Matrixpolymeren enthalten (Figur 2). Die Morphologie und Teilchengröße der Formmassen werden anhand von elektronenmikroskopischen Dünnschichtaufnahmen sichtbar gemacht. Der hydrierte Blockkautschuk, der der üblichen Abbildungstechnik der Elektronenmikroskopie nicht oder schwer zugänglich ist, wurde durch Strahlenabbau im Kontrast hervorgehoben. Die helle Phase in der Figur 1 und der Figur 2 stellt den Blockkautschuk dar, die dunkle Phase das Matrixpolymere.

Die Bestimmung der mittleren Teilchengröße der dispersen Weichkomponente kann z.B. durch Auszählung und Auswertung elektronenmikroskopischer Dünnschichtaufnahmen erfolgen (vgl. F. Lenz, Zeitschrift für Wiss. Mikroskopie, 63 (1956), S. 50/56).

Die mittlere Teilchengröße (Gewichtsmittel) der dispersen Weichkomponenten-Phase wurde bestimmt durch Auszählen und Mitteln der zur gleichen Größenklasse (konst. Intervallbreite) gehörigen Teilchen aus elektronenmikroskopischen Dünnschichtaufnahmen. Mit den Volumina der Teilchen (3. Potenz des scheinbaren Durchmessers) innerhalb der Intervalle wird die Verteilungssummenkurve bestimmt. Beim 50 %-Ordinatenwert kann auf der Abszisse der Äquivalentdurchmesser dann abgegriffen werden. Die angegebenen mittleren Durchmesser stellen dabei einen Mittelwert von mindestens 5000 Teilchen dar.

Die erfindungsgemäßen Formmassen haben eine mittlere Teilchengröße im Bereich zwischen 0,05 bis 2 $\mu$m, vorzugsweise zwischen 0,1 und 1,5 $\mu$m. Wesentliche Kennzeichen gegenüber dem Stand der Technik sind die Matrixeinschlüsse in der Kautschukphase und daß die Blockkautschukeinschlüsse durch dunkle Polyvinylaromat-Membranen eingehüllt sind. Dies ist in Figur 3 - schematisch dargestellt.

Die erfindungsgemäßen Formmassen besitzen neben einer hohen Wärmebeständigkeit und guten mechanischen Eigenschaften, insbesondere eine hohe Schlagzähigkeit und Bruchenergie und hohe Steifigkeit, eine vorzügliche Verarbeitbarkeit und hohe Dimensionsstabilität in den Fertigteilen. Die folgenden Beispiele dienen dazu, die Erfindung zu beschreiben, ohne daß damit eine Begrenzung der Erfindung beabsichtigt ist. Die angegebenen Teile sind Gewichtsteile, es sei denn, es ist anders angegeben.

Beispiele und Vergleichsbeispiele

Komponente a)

Es wurde ein Poly(2,6-dimethyl-1,4-phenylen)-ether mit einer Grenzviskosität von 0,6 dl/g - (gemessen in Chloroform bei 30°C) und einem Restkupfergehalt von 4 ppm, bezogen auf das Polymerisat, eingesetzt. Der Polyphenylenether war nach den Beispielen der DE-OS 30 35 599 (= EP 81 708) hergestellt worden.

Komponente b)

Folgende hydrierten Blockkautschukcopolymerisate wurden eingesetzt:

$b_1$: Ein ABA-Blockpolymerisat mit scharf getrennten A-Blöcken, bestehend aus Polystyrol, die 30 Gew.% ausmachen und einem hydrierten Polybutadienblock B, der 70 Gew.% ausmacht. Der Blockkautschuk hatte eine Glastemperatur von -48°C (nach K.H. Illers und H.Breuer, Colloid-Zeitschrift 176 - (1961), Seite 110) und ein Molekulargewicht von 70 000.

$b_2$: Ein lineares, hydriertes AB-Blockpolymerisat mit folgendem Aufbau:

A-Block: Polystyrol, Gewichtssumme 15 %

B-Block: hydrierter, statistischer Copolymerisat-Block, bestehend aus 20 Gew.% Styrol und 80 Gew.% Butadien

Glastemperatur: -57°C

Molekulargewicht: 70.000.

Komponente c)

Folgende Styrolpolymerisate wurden eingesetzt:

$c_1$: Ein Polystyrol mit einem Molekulargewicht von 140.000 (viskosimetrische Messung im Benzol bei 25°C).

$c_2$: Ein schlagfestes Polystyrol mit einer mittleren Teilchengröße (Gewichtsmittel) von 0,5 $\mu$m und einem Polybutadien-Anteil von 9 Gew.%, hergestellt gemäß DE-OS 30 35 648.

$c_3$: Ein Styrol-Acrylnitril-Copolymerisat mit einem Acrylnitril-Anteil von 5 Gew.%, einem Molekulargewicht von 160.000 (viskosimetrische Messung in Dimethylformamid bei 25°C).

$c_4$: Ein Styrol-Maleinsäureanhydrid-Copolymerisat mit einem Maleinsäureanhydrid-Anteil von 8,1 Gew.% und einem Molekulargewicht von 110.000 (viskosimetrische Messung in Dimethylformamid bei 25°C).

Komponente d)

$d_1$: Triphenylphosphat

$d_2$: Trisnonylphenylphosphit

Herstellung der Formmassen

Folgende Methoden wurden eingesetzt:

I Die in der Tabelle angegebenen Teile der Komponenten a), b), c) und d) werden in einem Rührkessel bei 120°C 40%ig in Toluol gelöst, gemischt und anschließend über einen Zweischneckenextruder mit drei Entgasungszonen bei Temperaturen von < 260°C aufkonzentriert. Die Entgasungsbedingungen wurden so eingestellt, daß ein Restlösungsmittelgehalt von 0,1 Gew.% in der Formmasse vorhanden war.

II Die Komponenten b), c) und d) wurden auf einem Zweischneckenextruder in einem Aufschmelzteil bei 180°C aufgeschmolzen und eine 40 %ige Lösung der Komponente a) zugesetzt. Das Einbringen erfolgte kurz vor der ersten Entgasungszone in dem Extruder. Es resultiert eine homogene Mischung aus der durch Abdampfen des Lösungsmittels die Formmasse isoliert wird.

III Die Komponenten a), b) und d) werden durch Abmischung von Lösungen der einzelnen Komponenten auf einem Zweischneckenextruder bei Temperaturen von 280°C hergestellt und das Lösungsmittel abgedampft.

Prüfung der Formmassen

Die Teilchengröße der Blockcopolymerisatteilchen wurde wie oben beschrieben ermittelt. Aus den genannten Mischungen wurden mittels einer Spritzgußmaschine bei 280°C Spritztemperatur Prüfkörper hergestellt.

Es wurde die Bruchenergie nach DIN 350 443, Blatt 1 bei 23°C gemessen und die Kerbschlagzähigkeit nach DIN 53 433 bei 23°C. Als Maß für die Steifigkeit wurde der Elastizitätsmodul nach DIN 53 457 ermittelt.

Die Fließfähigkeit wurde anhand des Schmelzindex nach DIN 53 735 bestimmt und die Wärmeformbeständigkeit nach DIN 53 460/B.

Das Verarbeitungsverhalten im Spritzguß wurde auf einer Einschneckenspritzgußmaschine, Fabrikat IDRA, Typ M + B 120S-4200 überprüft (Zuhaltekraft 12.000 KN, Einspritzvolumen 3200 cm³ eff). Es wurde eine Fernseherrückwand mit folgenden technischen Daten als Spritzling verwendet.

Mittleres Gewicht des Spritzlings betrug 1.800 kg

Die Abmessung des Spritzlings - (Länge/Breite/Höhe in mm) betrug 750/490/150.

Der maximale Fließweg FW/mittlere Wanddicke WD in mm ist 411/3.

FW/WD-Verhältnis ist 137:1.

Angußart und Abmessungen: Kegel in mm 7,5/10,5; Länge 90.

Bei der Herstellung wurden folgende Maschinendaten eingehalten:

Temperaturführung im Plastifizierungszylinder - (°C) wahlweise für die einzelnen Schüsse:

230/230/240/240/240

230/240/240/250/265

250/250/260/270/280

260/260/260/270/290

Temperatur in der Angußzone betrug 60°C. Die Temperatur im Werkzeug betrug: Gesenkboden 85°C, Gesenkmantel 85°C; Kern 70°C; Auswerferstempel 60°C, der Staudruck in bar war gleich Null (offene Düse)

Einspritzzeit in Sekunden: 3.

Nachdruckzeit in Sekunden: 1,2.

Abkühlzeit in Sekunden: 38.

Pausenzeit in Sekunden: 0.

Gesamtzykluszeit in Sekunden: 60.

Schneckendrehzahl in Minuten$^{-1}$: 36.

Das Verarbeitungsverhalten wurde über den Schmelzfließindex und die Verarbeitungsbreite beurteilt. Die Verarbeitungsbreite ist der Druckbereich, in dem die Formteile keine Beanstandungen aufweisen. Der Bereich wird bei tiefem Spritzdruck durch den optimalen Spritzdruck begrenzt, d.h. die Formteile weisen keine Einfallstellen mehr auf. Die obere Grenze ergibt sich aus dem Spritzdruck, bei dem die Formteile gerade noch entformt werden können. Oberhalb dieser Grenze wird die Form überfüllt. Je größer dieser Bereich ist, umso besser, d.h. mit umso geringeren Schwierigkeiten läßt sich ein Polymerisat verarbeiten. Eine hohe Verarbeitungsbreite ist erwünscht, um z.B. bei Druckschwankungen oder Schwankungen der Materialeigenschaften, die Ausfallrate an Spritzgußformlingen möglichst niedrig halten zu können. Die Tabelle enthält deshalb die Verarbeitungstemperatur in °C sowie der zu diesen Verarbeitungstemperaturen ermittelte optimale Spritzdruck in bar. Im Anschluß daran folgt eine Spalte, in der die Verarbeitungsbreite den jeweiligen Verarbeitungstemperaturen und dem ermittelten optimalen Spritzdruck zugeordnet ist. Die Tabelle schließt ab mit einer Spalte, in der Bemerkungen, z.B. über eventuelle Schäden (Angußreißer = Risse am Anguß; Schieferbruch = schiefriger Bruch im Angußbereich) an den erhaltenen Spritzgußformteilen enthalten sind.

Die Dimensionsstabilität wurde an bei 280°C gespritzten Formkörpern (Fernsehrückwände) bestimmt. Ermittelt wurde die Abweichung in der Längen-und Breitenabmessung unmittelbar nach dem Ausschluß aus der Spritzgußmaschine und eine Woche danach. Folgende Beurteilungen wurden zugrundegelegt:

Note 1: Veränderungen nicht meßbar

Note 2: Veränderungen kleiner als 1mm

Note 3: Veränderungen größer als 1mm

Die Ergebnisse der Tabelle verdeutlichen die vorteilhaften Eigenschaften der erfindungsgemäßen Formmassen hinsichtlich der Wärmeformbeständigkeit, hoher Zähigkeit und gleichmäßig hoher Steifigkeit sowie hinsichtlich Verarbeitbarkeit und Dimensionsstabilität. Vergleichbar sind die Beispiele 1 und 2 mit den Vergleichsbeispielen A sowie die Beispiele 8 und 9 mit dem Vergleichsbeispiel B.

Tabelle

| Beispiel | Zusammensetzung der Mischung (Gew.%) | | | | Herstellmethode | Mittlere Teilchengröße der Blockkautschukteilchen (Gewichtsmittel) ($\mu$m) | Vicat-Temp. (°C) | Kerbschlagzähigkeit (KJ/m$^2$) | Bruchenergie (Nm) | Elastizitätsmodul (Zug-Modul) (N/mm$^2$) |
|---|---|---|---|---|---|---|---|---|---|---|
| | a) | b) | c) | d) | | | | | | |
| 1 | 45 | 20 ($b_1$) | 35 ($c_1$) | 2 ($d_2$) | I | 0,25 | 120 | 12 | 35 | 2500 |
| 2 | 45 | 20 ($b_1$) | 35 ($c_1$) | 2 ($d_2$) | II | 0,34 | 118 | 13 | 38 | 2500 |
| 3 | 45 | 20 ($b_2$) | 35 ($c_1$) | 2 ($d_2$) | II | 0,56 | 120 | 13 | 40 | 2500 |
| 4 | 45 | 20 ($b_2$) | 35 ($c_3$) | 2 ($d_2$) | II | 0,50 | 122 | 16 | 33 | 2600 |
| 5 | 45 | 20 ($b_2$) | 35 ($c_4$) | 2 ($d_2$) | II | 0,44 | 127 | 14 | 34 | 2600 |
| 6 | 45 | 20 ($b_2$) | 35 ($c_2$) | 2 ($d_2$) | II | 0,59 | 114 | 23 | 50 | 2400 |
| 7 | 60 | 30 ($b_1$) | – | 2 ($d_2$) 8 ($d_1$) | I | 0,38 | 133 | 28 | 48 | 2400 |
| 8 | 60 | 30 ($b_2$) | – | 2 ($d_2$) 8 ($d_1$) | I | 0,46 | 134 | 30 | 50 | 2400 |
| 9 | 60 | 30 ($b_2$) | – | 2 ($d_2$) 8 ($d_1$) | II | 0,50 | 136 | 31 | 53 | 2500 |
| Vergleichsbeispiel (nicht erfindungsgemäß) | | | | | | | | | | |
| A | 45 | 20 ($b_1$) | 35 ($c_1$) | 2 ($d_2$) | III | > 2 | 111 | 9 | 23 | 2200 |
| B | 60 | 30 ($b_2$) | – | 2 ($d_2$) 8 ($d_1$) | III | > 2 | 131 | 19 | 24 | 2100 |

Tabelle: Fortsetzung

| Bei-spiel | Meltindex 21,6 Kp 250⁰C (g/10') | Spritztem-peratur (⁰C) | Verarbeitbarkeit | | Dimensionsstabilität |
| --- | --- | --- | --- | --- | --- |
| | | | Spritzdruck (bar) | Verarbeitungs-breite | Note |
| 1 | 31 | 280 | 1100 | 100 | 1 |
| | | 300 | 1000 | 90 | |
| 2 | 30 | 280 | 1090 | 110 | 1 |
| | | 300 | 990 | 100 | |
| 3 | 38 | 280 | 1040 | 110 | 1 |
| | | 300 | 920 | 120 | |
| 4 | 36 | 280 | 1090 | 110 | 1 |
| | | 300 | 950 | 110 | |
| 5 | 30 | 280 | 1120 | 100 | 1 |
| | | 300 | 1000 | 110 | |
| 6 | 43 | 280 | 1030 | 110 | 1 |
| | | 300 | 900 | 120 | |
| 7 | 84 | 280 | 1000 | 110 | 1 |
| | | 300 | 850 | 120 | |
| 8 | 102 | ·280 | 980 | 120 | 1 |
| | | 300 | 820 | 120 | |
| 9 | 95 | 280 | 990 | 110 | 1 |
| | | 300 | 840 | 120 | |
| A | 28 | 280 | 1220 | 70 | 3 |
| | | 300 | 1100 | 70 | |
| B | 85 | 280 | 1090 | 60 | 2 |
| | | 300 | 980 | 50 | |

## Ansprüche

1. Thermoplastische Formmassen bestehend aus

a) mindestens einem Polyphenylenether

b) mindestens einem hydrierten Blockcopolymeren aus mindestens einem polyvinylaromatischen Block und einem gesättigten Kautschukblock,

c) gegebenenfalls einem Polyvinylaromaten und

d) gegebenenfalls üblichen Zusätzen

dadurch gekennzeichnet, daß in einer Polymermatrix, bestehend aus Polyphenylenether gegebenenfalls im Gemisch mit einem Polyvinylaromaten die hydrierten Blockcopolymeren gleichmäßig dispergiert enthalten sind, wobei die Blockcopolymerteilchen eine mittlere Größe - (Gewichtsmittel) im Bereich von 0,05 bis 2,0 μm und eine Zellenteilchenmorphologie mit Einschlüssen aus hydriertem Blockcopolymeren und Umhüllungen von Polyvinylaromatmembranen haben.

2. Thermoplastische Formmasse nach Anspruch 1, dadurch gekennzeichnet, daß das hydrierte Blockcopolymere aufgebaut ist aus

b₁) mindestens einem thermoplastischen Block, bestehend aus Polyvinylaromaten

b₂) mindestens einem Elastomerblock, bestehend aus mindestens einem konjugierten Dien und gegebenenfalls statistisch eingebauten vinylaromatischen Verbindungen und

b₃) gegebenenfalls einem Kopplungsmittel.

3. Thermoplastische Formmasse nach Anspruch 1, dadurch gekennzeichnet, daß 20 bis 90 Gew.-Teile der Masse aus Polyphenylenether a), 2 bis 40 Gew.-Teile aus hydriertem Blockcopolymerisat b), 0 bis 78 Gew.-Teile aus einem Polyvinylaromaten c) und 0 is 40 Gew.-Teile aus üblichen Zusätzen besteht, wobei die Gew.-Teile sich in allen Fällen auf 100 addieren.

4. Verfahren zur Herstellung von thermoplastischen Formmassen gemäß Anspruch 1, dadurch gekennzeichnet, daß die Komponenten a), b) und gegebenenfalls c) in Lösung gemischt und anschließend aus der Lösung isoliert werden.

5. Verfahren gemäß Anspruch 4, dadurch gekennzeichnet, daß die Komponenten a), b) und c) in einem aromatische oder halogenhaltigen aliphatischen Kohlenwasserstoff in Konzentrationen von 10 bis 80 Gew.%, bezogen auf die Gesamtmischung aus a), b) und c) und Lösungsmittel gelöst und anschließend die Lösungsmittel bei Temperaturen unter 280°C entfernt werden.

Figur 1

Figur 2

# FIG.3

Blockkautschukeinschlüsse

Polyvinylaromat-Membran